# EUROPEAN PATENT APPLICATION

(11) **EP 4 555 851 A1**
(43) Date of publication of application: **21.05.2025**
(21) Application number: 24158723.7
(22) Date of filing: 20.02.2024
(51) Int. Cl.: A01D 41/14, A01D 34/835

(54) **APPARATUS FOR THE FIELD HARVESTING OF SUNFLOWERS**

(30) Priority: 20.11.2023 IT 202300024510
(71) Applicant: NARDI SRL, 37040 Veronella (VR) (IT)
(72) Inventor: NARDI, Alessandro, 36045 LONIGO VI (IT)
(74) Representative: Modiano, Micaela Nadia

(57) **Abstract**

An apparatus for the field harvesting of sunflowers, which comprises a harvesting head (2) which can be associated with the front part of an agricultural vehicle (3) and has a harvesting bar (4), which supports a plurality of harvesting containment bodies (5), mutually spaced apart along the longitudinal extension of the harvesting bar (4), in order to define a plurality of passage slits (6) which can be passed through longitudinally by the sunflower plants. The harvesting bar (4) is provided with cutting means (7), which are configured to sever, from the sunflower plants passing through the passage slits (6), their upper part. A chaff cutter (9) is mounted below the harvesting head (2) and has a supporting frame (10) which supports a plurality of cutting blades (11), which are connected kinematically, by means of motion transmission means, to a power take-off of the agricultural vehicle (3). According to the invention such motion transmission means comprise a gear train (13) which is arranged along the longitudinal extension of of the supporting frame (10).

## Description

The present invention relates to an apparatus for the field harvesting of sunflowers.

Agricultural machines are known for the harvesting of plants in the field, such as combine harvesters or the like, which, generally speaking, comprise an agricultural vehicle or tractor, which is associated, at the front part with respect to its advancement direction, with a harvesting apparatus, that makes it possible to retrieve the cultivated plants from the field or, at least, the useful parts of the cultivated plants that are to be harvested.

In particular, apparatuses for harvesting sunflowers are known, which are configured to allow the field harvesting only of the blooms of the sunflower plants, leaving in the field most of the stem or woody stalk of the plants, which are unnecessary for the harvest.

These apparatuses for harvesting sunflowers are typically constituted by a harvesting head which has a harvesting bar which extends transversely to the advancement direction of the agricultural vehicle and which supports, along its longitudinal extension, a plurality of harvesting containment bodies, shaped substantially like "pans" or "trays", each defining a respective receptacle which is open in an upward region and is designed to receive the blooms of the sunflowers which extend, on the front side of the harvesting bar, in the advancement direction of the agricultural vehicle, along a direction substantially at right angles to the longitudinal extension of the harvesting bar.

In particular, the container bodies of the harvesting head are mutually spaced apart, so as to be separated from each other by passage slits, which are passed through by the plants during the forward travel of the agricultural vehicle.

The harvesting head is further provided with a conveyance screw feeder, which extends along the longitudinal extension of the harvesting bar and which is caused to rotate in order to convey the sunflowers harvested by the harvesting head to the agricultural vehicle.

The conveyance screw feeder, on its front side with respect to the advancement direction of the agricultural vehicle, is covered by a covering wall, against which the blooms of the sunflower plants, that have reached the end of the passage slits located proximate to the harvesting bar, rest.

The harvesting head is also provided with a cutting blade, which moves in an alternating motion along the harvesting bar, in order to sever the sunflower blooms from the plants that pass through the passage slits and, once the blooms have fallen into the container bodies, they are pushed toward the conveyance screw feeder by a paddle wheel, which is provided with radial vanes and is rotatably mounted on the harvesting bar.

Harvesting heads that are structured like this, although conceptually valid in that they do not also collect the woody stalks of the plants from the field, have a drawback however in that they require, after the harvest operations, a subsequent operation of shredding the woody stalks that remain on the field, by means of another pass over the field of the agricultural vehicle, to which adapted shredding heads are attached.

To solve this drawback, apparatuses have been provided for harvesting sunflowers which have a harvesting head for sunflower blooms, below which a chaff cutter is mounted, which is connected to the harvesting bar of the harvesting head.

Usually, the chaff cutter is connected to the harvesting head with the ability to adjust its position with respect to the harvesting head, so as to enable the operator to deploy the chaff cutter at a preset distance from the ground, independently of the position with respect to the ground in which the harvesting head is used.

The chaff cutter of these apparatuses for harvesting sunflowers has a longitudinal frame, substantially of the same length as the harvesting head, on which a plurality of gearboxes is mounted which are arranged mutually spaced apart along the extension of the frame of the chaff cutter, and each of which actuates, in rotation, a respective pair of blades.

In particular, the gearboxes of the chaff cutter are connected in series to each other by means of the interposition of shafts for transmitting motion, and they receive the motion from a main gearbox arranged upstream of the series of gearboxes, which, in turn, can be connected, by means of a cardan shaft, to a power take-off of the agricultural vehicle.

The chaff cutters provided according to the prior art have a number of drawbacks.

Firstly, the gearboxes are very delicate components and the chaff cutter, which operates quite close to the ground, is easily subjected to impacts against the ground which could result in breakages in the gearboxes, with the consequent need to stop use of the chaff cutter in order to make repairs.

Secondly, the gearboxes are expensive and require lengthy supply time, with the consequence, for makers of the apparatuses for harvesting sunflowers, of needing a considerable number of spare gearboxes in stock, in order to be able to meet demand resulting from repairs to chaff cutters.

Furthermore, the gearboxes, being made with a cast iron box-like body filled with oil, are quite heavy, which entails the need to make the frame of the chaff cutter with the required assurances of solidity and strength.

Another drawback of the chaff cutters in the prior art is constituted by the fact that each one of the single gearboxes has a significant power consumption, such that, considering the number of gearboxes typically mounted on chaff cutters, these gearboxes come to absorb a great amount of power from the agricultural vehicle.

The size of the gearboxes makes them cumbersome, and means that the chaff cutter cannot rotate the blades close to the bottom of the harvesting head, when necessary.

As a consequence, the weight, the power consumption and the fragility of the gearboxes has until now limited the lengthwise dimensions of chaff cutters associated with the harvesting heads available on the market.

The aim of the present invention is to provide an apparatus for the field harvesting of sunflowers which is capable of improving the prior art in one or more of the above-mentioned aspects.

Within this aim, an object of the invention is to provide an apparatus for the field harvesting of sunflowers which makes it possible to execute, with a single pass on the field, both the harvesting of the sunflower blooms and the shredding of the woody stalks of the plants, remaining on the ground, without the drawbacks of the prior art.

Another object of the invention is to provide an apparatus for the field harvesting of sunflowers which has a chaff cutter that is relatively sturdy and at the same time light.

Another object of the present invention is to provide an apparatus for the field harvesting of sunflowers which has a chaff cutter that is extremely reliable during its use, so as not to incur in frequent stoppages as a result of breakages owing to accidental impacts against the ground.

Another object of the present invention is to provide an apparatus for the field harvesting of sunflowers which has a chaff cutter that requires a lower power consumption with respect to the chaff cutters of the prior art.

Another object of the present invention is to provide an apparatus for the field harvesting of sunflowers which has a chaff cutter that can have more compact dimensions with respect to the chaff cutters of the prior art, and which can also be easily mounted on or dismounted from harvesting heads already in use.

A further object of the present invention is to overcome the drawbacks of the prior art in an alternative manner to any existing solutions.

Another object of the invention is to provide an apparatus for the field harvesting of sunflowers which can also be competitive from an economic viewpoint.

This aim and these and other objects which will become better apparent hereinafter are achieved by an apparatus for the field harvesting of sunflowers according to claim 1, optionally provided with one or more of the characteristics of the dependent claims.

Further characteristics and advantages of the invention will become better apparent from the detailed description that follows of a preferred, but not exclusive, embodiment of the apparatus for the field harvesting of sunflowers according to the invention, which is illustrated for the purposes of non-limiting example in the accompanying drawings wherein:

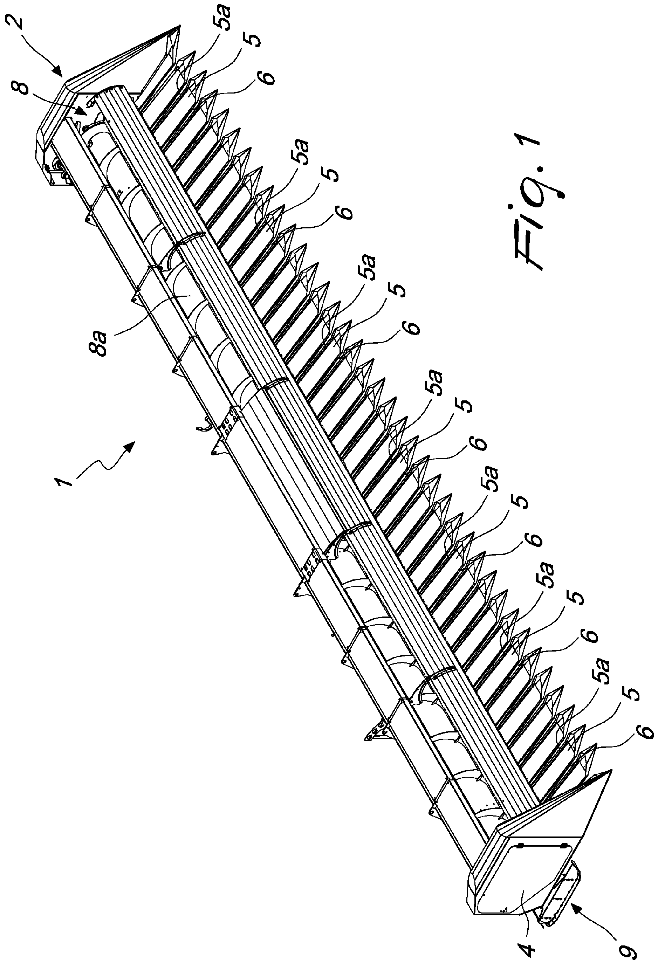

Figure 1 is a perspective view from above of the apparatus according to the invention;

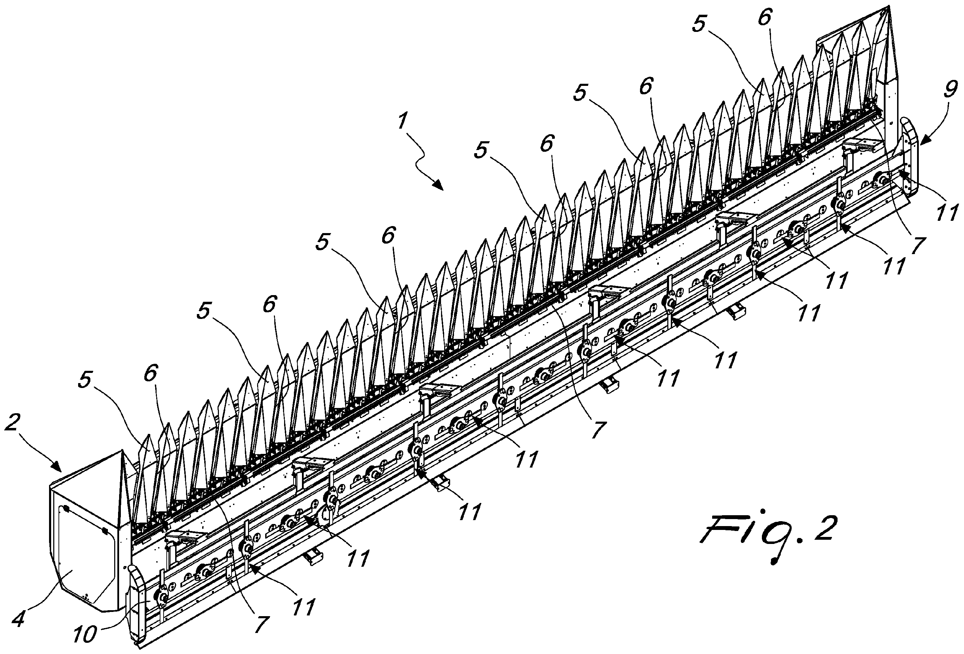

Figure 2 is a perspective view from below of the apparatus according to the invention;

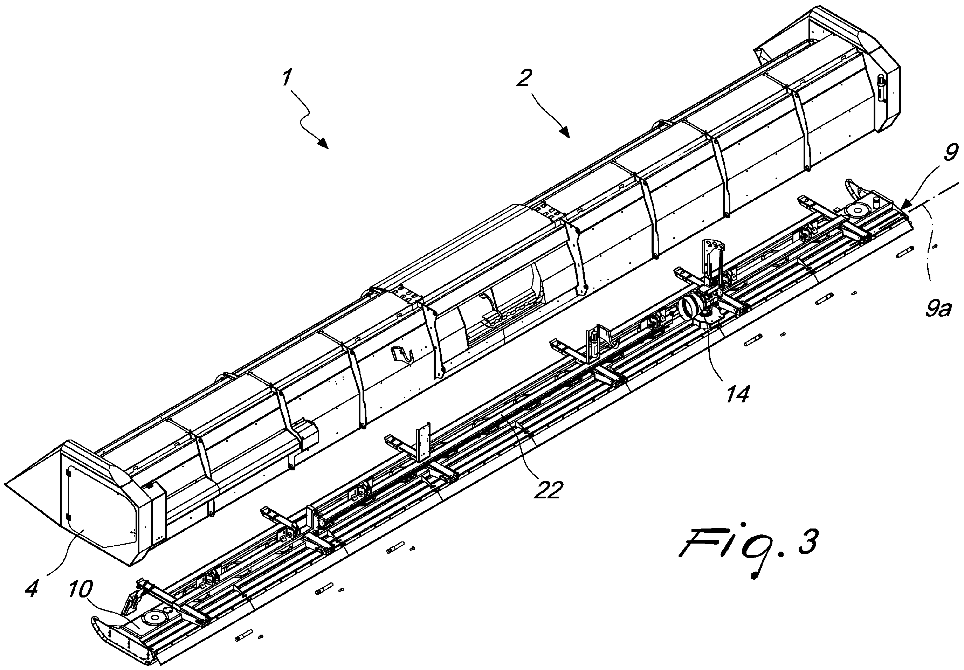

Figure 3 is an exploded perspective view of the apparatus according to the invention;

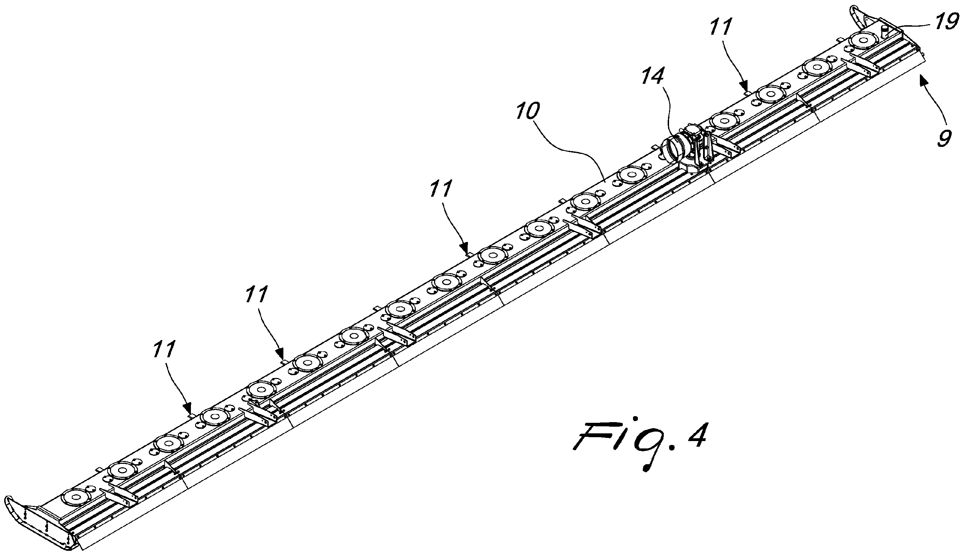

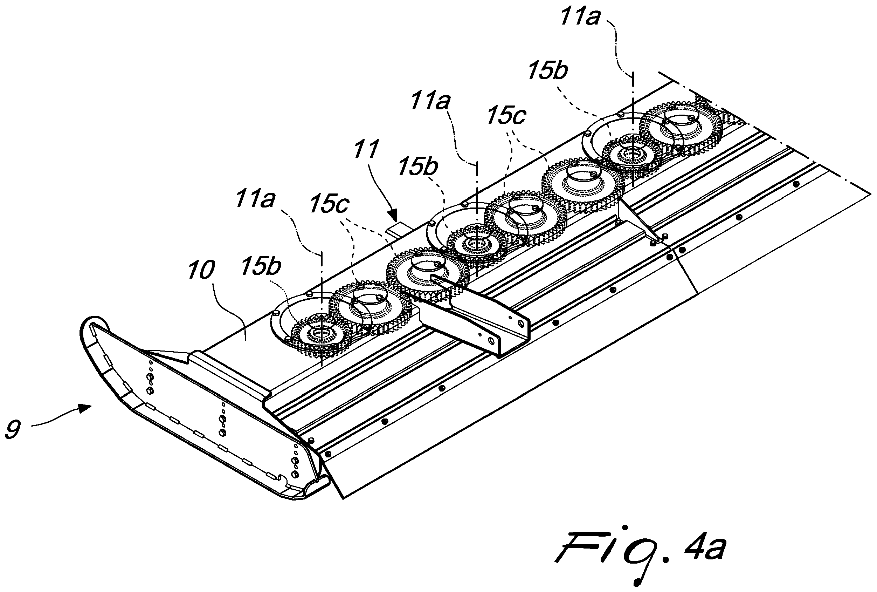

Figure 4 is a perspective view of a chaff cutter of the apparatus according to the invention;
Figure 4a is an enlarged-scale detail of Figure 4, partially transparent, showing the interior of the chaff cutter;

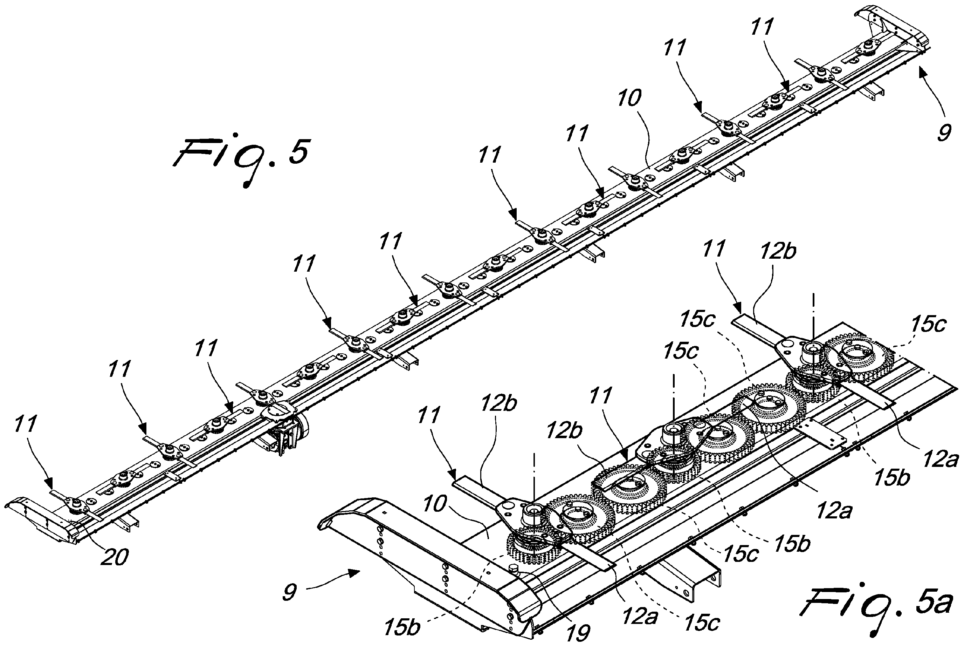

Figure 5 is a perspective view from below of the chaff cutter;
Figure 5a is an enlarged-scale detail, partially transparent, of the chaff cutter;

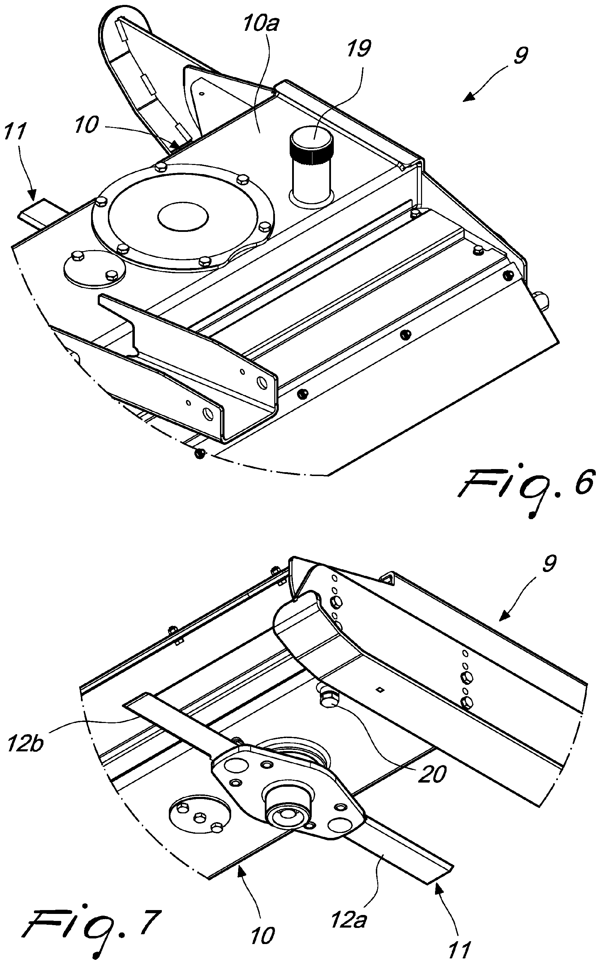

Figure 6 is a perspective view from above of a detail of the chaff cutter;
Figure 7 is a perspective view from below of another detail of the chaff cutter;

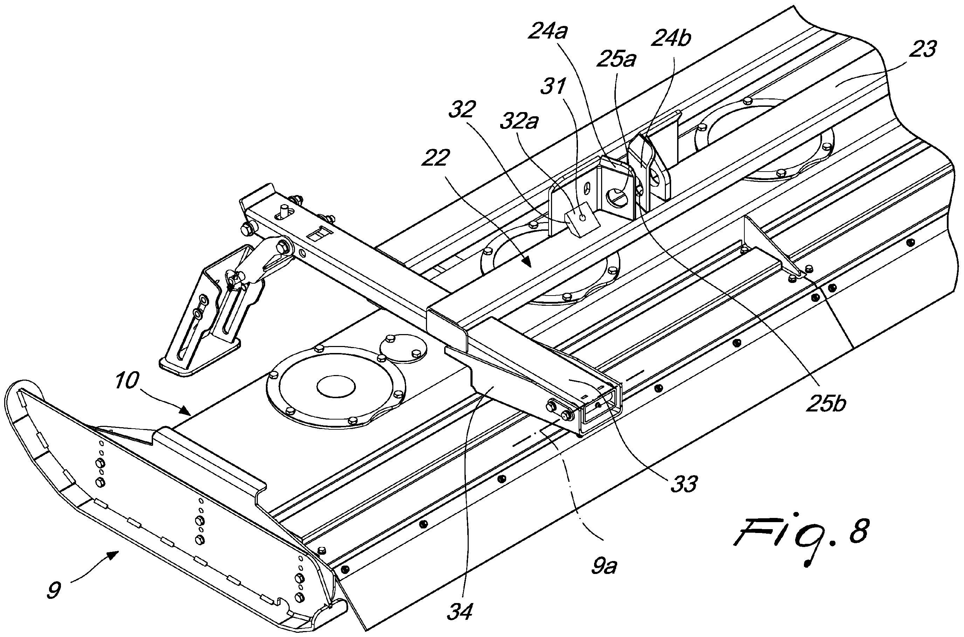

Figure 8 is a perspective view from above of a portion of the chaff cutter;

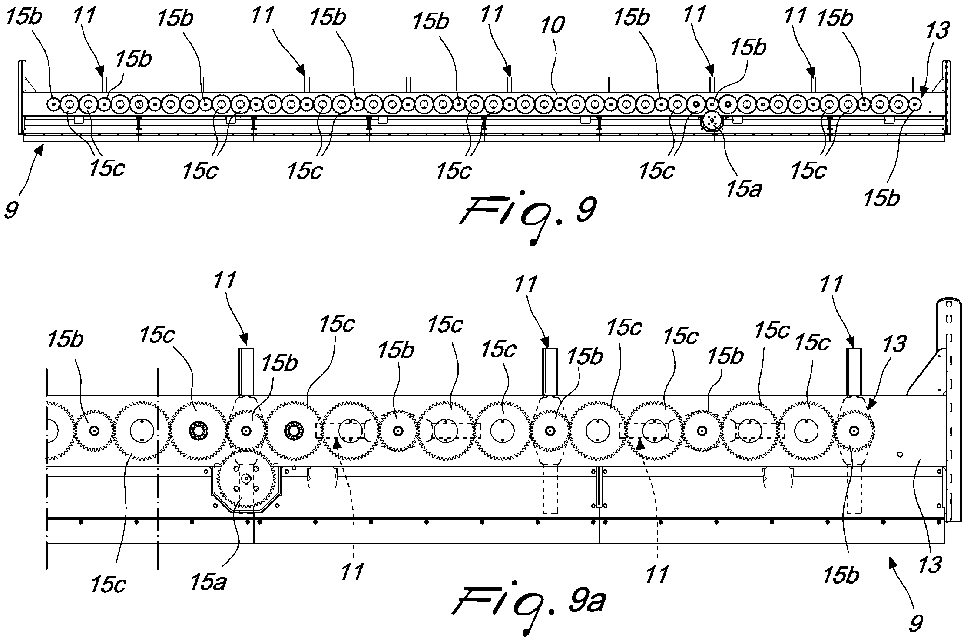

Figure 9 is a plan view from above of the chaff cutter, with some parts omitted to show the interior;
Figure 9a is an enlarged-scale detail of Figure 9 with some parts shown transparent;

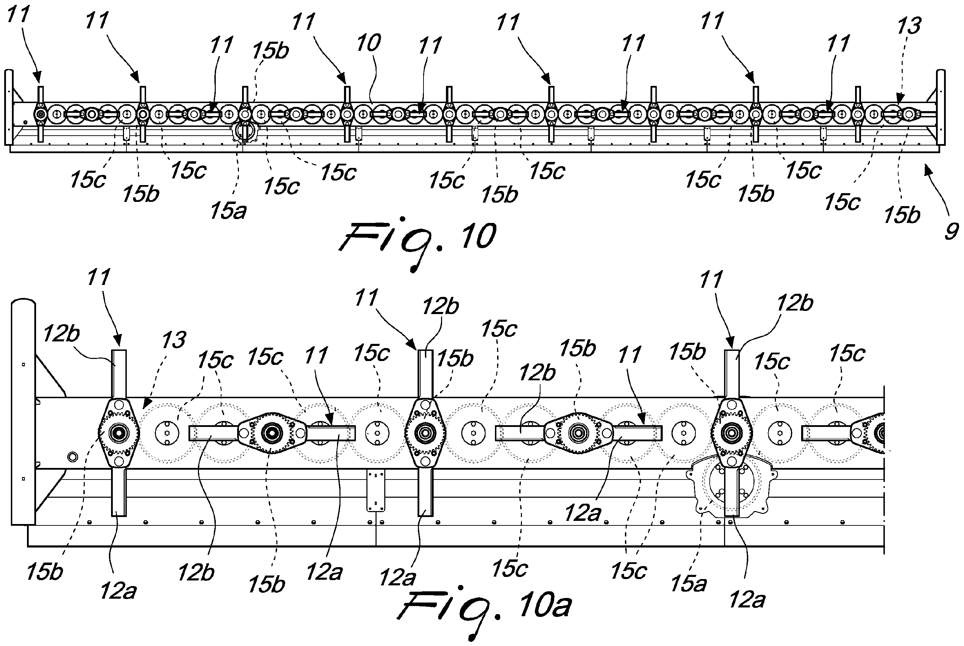

Figure 10 is a plan view from below, partially transparent, of the chaff cutter;
Figure 10a is an enlarged-scale detail of Figure 10;

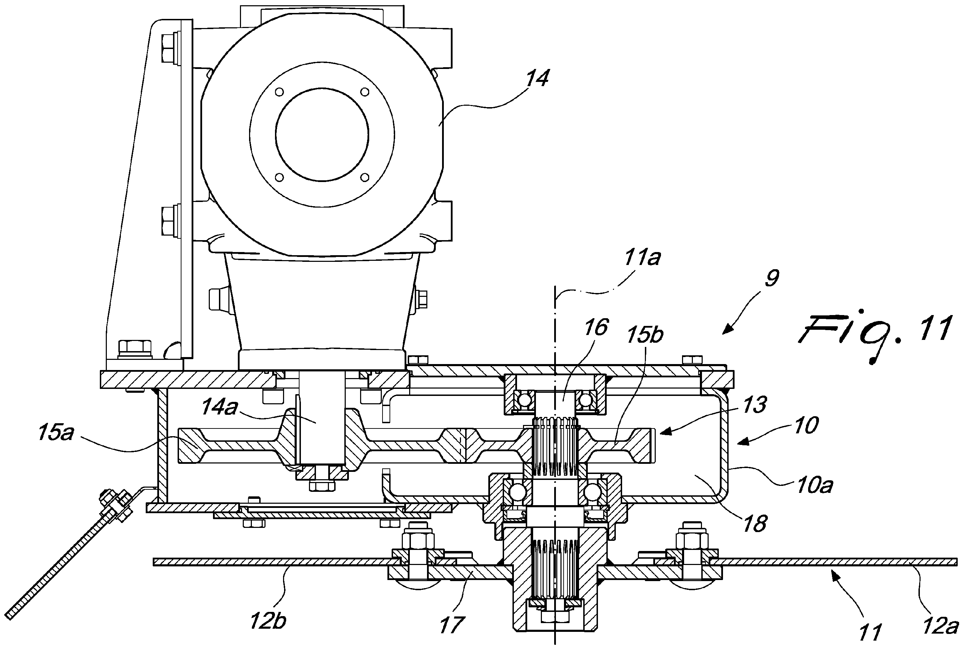

Figure 11 is a cross-sectional view of the chaff cutter;

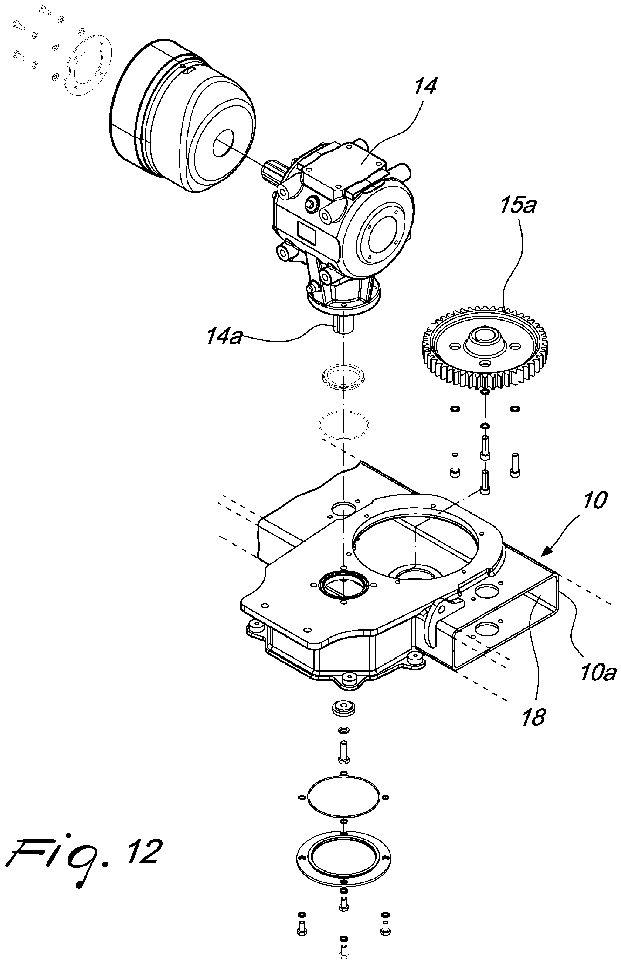

Figure 12 is an exploded perspective view of a portion of the chaff cutter;

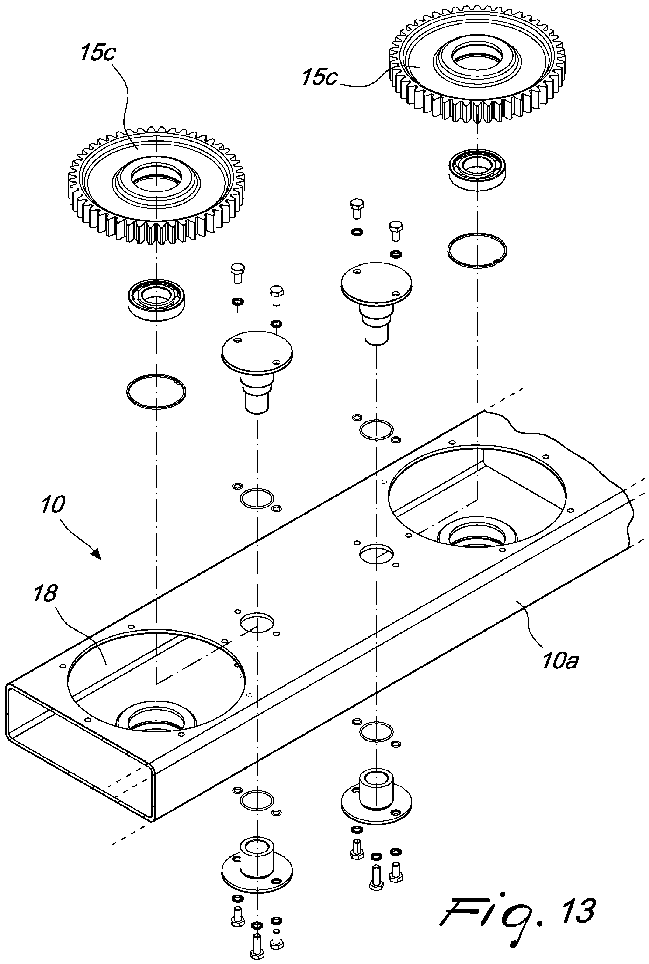

Figure 13 is an exploded perspective view of another portion of the chaff cutter;

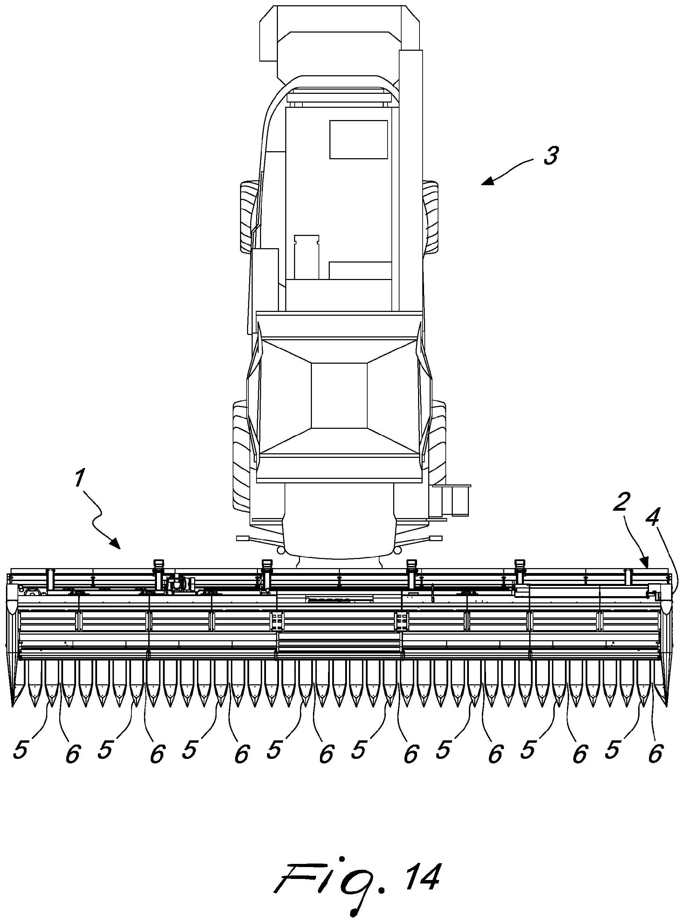

Figure 14 is a plan view from above of the apparatus according to the invention applied to an agricultural vehicle;

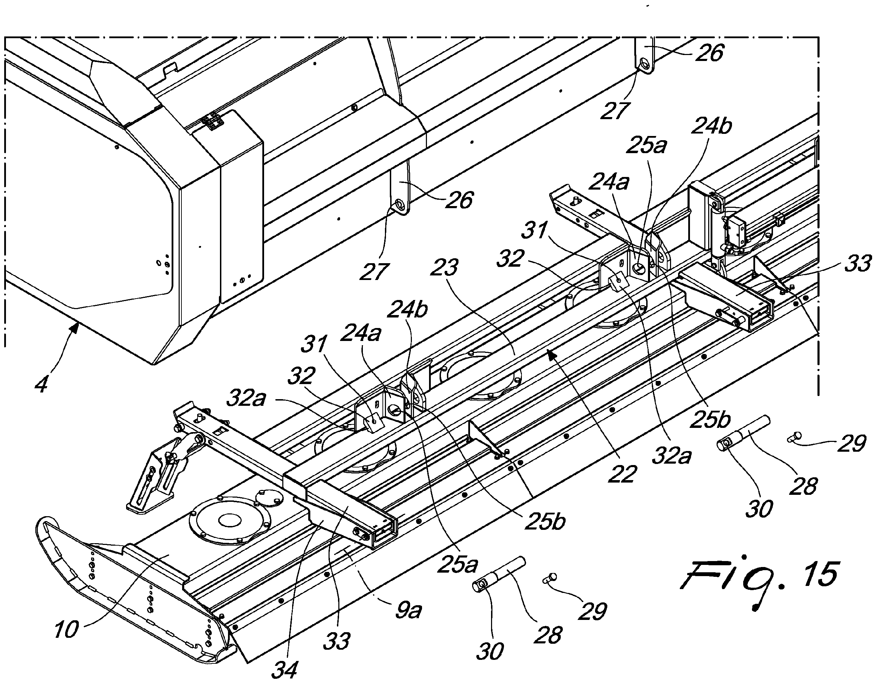

Figure 15 is an enlarged-scale detail of Figure 3.

With reference to the figures, the apparatus for the field harvesting of sunflowers according to the invention, generally designated by the reference numeral 1, comprises a harvesting head 2, which can be associated with the front part of an agricultural vehicle 3, which can move over a field cultivated with sunflower plants.

The harvesting head 2 has a harvesting bar 4 which extends substantially transversely to the advancement direction of the agricultural vehicle 3 and which supports a plurality of harvesting containment bodies 5, on its forward-facing side with respect to the advancement direction of the agricultural vehicle 3.

In particular, such harvesting containment bodies 5 conveniently have an elongated extension along a direction that is, during use, substantially parallel to the advancement direction of the agricultural vehicle 3, and each body defines a respective receptacle 5a, which is open in an upward region and is designed to receive, by falling into it, the parts of the sunflower plants that are collected by the harvesting head 2.

More specifically, the harvesting containment bodies 5 are mutually spaced apart along the longitudinal extension of the harvesting bar 4, in order to define, in the spaces comprised between them, a plurality of passage slits 6, which are designed to be passed through longitudinally by the sunflower plants that are present in the cultivated field, as the agricultural vehicle 3 advances.

The harvesting bar 4 is, furthermore, provided with cutting means 7, which are configured to sever, from the sunflower plants passing through the passage slits 6, their upper part i.e. the part that includes the bloom of the sunflower, therefore leaving the woody stalks of the sunflower plants on the cultivated field.

The cutting means 7 are arranged substantially proximate to the opposite ends of the passage slits 6 with respect to the corresponding access ends, and can be constituted by one or more blade elements which can move in an alternating translational motion, along a direction that is substantially parallel to the longitudinal extension of the harvesting bar 4, or, as in the embodiment illustrated, by one or more rotating shafts provided with cutting teeth, arranged with their axes substantially parallel to the longitudinal extension of the harvesting bar 4.

Conveyance means 8 are also provided on the harvesting bar 4, the function of which is to convey the parts severed from the sunflower plants in the direction of the agricultural vehicle 3, where they are stored and optionally treated.

Such conveyance means 8 comprise, conveniently, at least one screw feeder 8a, which is arranged, with its axis, substantially parallel to the longitudinal extension of the harvesting bar 4.

Conveniently, the conveyance means 8 further comprise at least one paddle wheel, not shown, with radial vanes, which is mounted so that it can rotate about an axis that is parallel to the axis of the screw feeder 8a in order to pull the parts severed from the sunflower plants toward the screw feeder 8a.

The screw feeder 8a, and the paddle wheel, are caused to rotate via their connection, for example by way of a cardan shaft, to one of the power take-offs provided on the agricultural vehicle 3.

Below the harvesting head 2 a chaff cutter 9 is mounted, the function of which is to execute, during the advancement of the agricultural vehicle 3, the shredding of the woody stalks left on the cultivated field by the harvesting head 2.

In particular, the chaff cutter 9 is advantageously arranged in a rearward position, along the direction of advancement of the agricultural vehicle 3, with respect to the harvesting containment bodies 5 and the cutting means 7, so as to be able to act on the sunflower plants, during the advancement of the agricultural vehicle 3 over the cultivated field, after the cutting means 7.

In detail, the chaff cutter 9 has a supporting frame 10 which extends substantially parallel to the harvesting bar 4.

In particular, a plurality of cutting blades 11 are mounted on the supporting frame 10 of the chaff cutter 9, and are arranged mutually spaced apart along the longitudinal extension of the supporting frame.

Such cutting blades 11 can rotate about respective axes of rotation 11a which are substantially perpendicular to the longitudinal extension of the supporting frame 10 and which are oriented, in use, substantially at right angles to the ground.

Conveniently, each one of the cutting blades 11 comprises at least one respective pair of blades 12a, 12b, which extend substantially radially, on mutually opposite sides, with respect to the corresponding axis of rotation 11a.

More specifically, the cutting blades 11 of the chaff cutter 9 are kinematically connected, by virtue of motion transmission means, to another of the power take-offs that are typically present on the agricultural vehicle 3, for their rotational actuation about their axes of rotation 11a, so as to execute, during the forward travel of the agricultural vehicle 3, the shredding of the woody stalks of the sunflower plants left on the cultivated field after the passage of said harvesting head 2.

The above-mentioned motion transmission means comprise a gear train 13, which is arranged along the longitudinal extension of the supporting frame 10 and receives motion from a single driving gearbox 14, which is also supported by the supporting frame 10 and is adapted to be kinematically connected, for example through a corresponding cardan shaft, to the power take-off of the agricultural vehicle 3 that is used to actuate the cutting blades 11 of the chaff cutter 9.

Advantageously, such gear train 13 comprises a plurality of gears 15a, 15b, 15c, which are arranged mutually in series along the longitudinal extension of the supporting frame 10.

In particular, the gears 15a, 15b, 15c of the gear train 13 are arranged mutually side by side along the longitudinal extension of the supporting frame 10 and mutually meshing and, more precisely, each one of the gears 15a, 15b, 15c meshes, with its perimetric teeth, with the next gear wheel after it in the arrangement in series of those gears.

More specifically, the gears 15a, 15b, 15c of the gear train 13 are rotatably mounted on the supporting frame 10 with their mutually parallel axes oriented substantially perpendicular to the longitudinal extension of the supporting frame of the chaff cutter 9.

At least one group of gears of the gear train 13 is, furthermore, connected by means of respective output shafts 16, which protrude downward from the supporting frame 10, to respective cutting blades 11.

More precisely, some gears of the gear train 13 are axially keyed around a respective output shaft 16, on which, in turn, at least one respective cutting blade 11 is mounted, the axis of rotation 11a of which is defined by the output shaft 16.

For example, a plate element 17 is provided axially mounted around the end portion of each output shaft 16 that lies opposite to the portion that is keyed in the corresponding gear wheel, to said plate element 17 a pair of mutually opposite blades 12a, 12b is fixed which protrude from the plate element with respect to the corresponding output shaft 16 in a substantially radial direction.

In more detail, the gears 15a, 15b and 15c comprise, arranged mutually in series: at least one driving gear 15a, which is connected to the driving gearbox 14, so as to receive the motion directly from the driving gearbox 14, for example through a driving shaft 14a exiting from the driving gearbox 14 with its axis oriented substantially at right angles to the ground, and around which the driving gear 15a is mounted; driven gears 15b, which are the gearwheels that are each connected to corresponding cutting blades 11 via the above-mentioned output shafts 16; and idler gears 15c, which are interposed between the driven gears 15b and which have, conveniently, a greater diameter than the driven gears 15b.

Advantageously, two idler gears 15c are interposed between one driven gear 15b and the subsequent driven gear 15b, in the arrangement in series of the gears of the gear train 13; the idler gears 15c are meshed with each other and one of which meshes with the driven gear 15b arranged upstream in the arrangement in series of the gears of the gear train 13 and the other one with the driven gear 15b arranged downstream in the arrangement in series of the gears of the gear train 13.

It should be noted that, conveniently, the transmission of motion, from the single gearbox 14 with which the chaff cutter 9 of the apparatus according to the invention is provided and, more specifically, from its driving shaft 14a, to the output shafts 16, connected to the cutting blades 16, is exclusively achieved by the gears 15a, 15b, 15c of the gear train 13, without the interposition, between the output shafts 16, of other components, such as transmission shafts or other gearboxes, as in the prior art.

Advantageously, the supporting frame 10 of the chaff cutter 9 comprises at least one tubular portion 10a, which defines internally a chamber or compartment 18 which extends axially along the longitudinal extension of the supporting frame 10.

In particular, the gear train 13 is accommodated inside the tubular portion 10a and, more precisely, in the corresponding compartment 18.

Conveniently, the tubular portion 10a and, in particular, the compartment 18 are filled with gear lubricant, for example a lubricant oil for transmissions, so that the gears 15a, 15b, 15c of the gear train 13 are at least partially immersed in the gear lubricant.

To this end, in the tubular portion 10a of the supporting frame 10 there is, advantageously, at least one drainage and venting cap 19 for the lubricant oil, which is arranged, on the side of the supporting frame 10 directed upward, substantially at a longitudinal end of the supporting frame. Conveniently, at the opposite end and on the side of the supporting frame 10 that is directed downward, a drainage cap 20 for the lubricant oil is also provided.

Conveniently, the chaff cutter 9 is mounted on the harvesting head 9 in a removable manner, so as to offer the operator the option to decide whether or not to apply it to the harvesting head 2, according to requirements.

Advantageously, the chaff cutter 9 is furthermore mounted on the harvesting head 2 with the possibility to rotate about a hinge axis 9a which is substantially parallel to the longitudinal extension of the supporting frame 10, and means are also provided for adjusting the angular position of the chaff cutter 9, about the hinge axis 20, with respect to the harvesting head 2, so as to be able to vary the arrangement of the harvesting head 2 with respect to the agricultural vehicle 3, so that the container bodies 5 are inclined downhill with respect to the ground, proceeding from the harvesting head toward the agricultural vehicle 3, in order to facilitate the fall towards the conveyance means 8 of the parts of the sunflower plants that are severed by the cutting means 7, while at the same time being able to keep constant the distance of the chaff cutter 9 from the ground and the axes of rotation 11a of the cutting blades 11 substantially perpendicular to the ground.

For example, the above-mentioned adjustment means comprise hydraulic pistons, not shown, interposed between the chaff cutter 9 and the harvesting head 2 and powered with the hydraulic system of the agricultural vehicle 3.

Advantageously, between the harvesting head 2 and the chaff cutter 9 at least one subframe 22 is provided which is configured to allow the chaff cutter to be mounted on the harvesting head 2.

Conveniently, the subframe 22 comprises a beam 23, arranged above the chaff cutter 9 and extending substantially parallel to the frame 10 of the chaff cutter.

Fixed on the beam 23 are means for coupling to the harvesting bar 4, which are mutually spaced apart along the extension of the beam 23 and are constituted by pairs of fixing tabs 24a, 24b, facing each other and perforated by respective mutually-aligned holes 25a, 25b.

Respective ribs 26 provided on the rear side of the harvesting bar 4 can be inserted between the fixing tabs 24a, 24b, and are provided, in a lower region, with a respective eye or coupling hole 27, intended to be positioned, with the corresponding rib 26 inserted between the respective fixing tabs 24a, 24b, so as to be aligned with the holes 25a and 25b of the fixing tabs 24a, 24b. Conveniently, the fixing tabs 24a, 24b have, in an upward region, inclined guiding portions in order to facilitate insertion of the ribs 26.

With the ribs 26 inserted between the respective fixing tabs 24a, 24b, a respective locking pin 28 can be inserted through the holes 25a, 25b and the eye 27, and is subsequently fixed to the beam 23 with a screw 29 which passes through a passage 30 defined transversely to the locking pin 28, and which can be screwed into a threaded hole 31, provided in an abutment block 32 which is fixed to the beam 23, at an inclined contact plane 32a thereof.

Advantageously, the beam 23 is supported by a plurality of levers 33, which are articulated at one of their ends, about the above-mentioned hinge axis 9a, to respective arms 34 which are fixed to the frame 10 of the chaff cutter 9.

It should be noted that, thanks to the presence of such subframe 22, the chaff cutter 9 can be installed on any harvesting head 2, even on harvesting heads already in use and, in particular, even on harvesting heads to which a chaff cutter was not coupled originally, so as to offer the possibility to provide the chaff cutter 9 as a self-contained component, which can be mounted, according to requirements, on any harvesting head, without requiring the combined purchase of the harvesting head and the chaff cutter.

Operation of the apparatus according to the invention is the following.

The apparatus according to the invention is mounted on the front part of the agricultural vehicle and the conveyance means 8 of the harvesting head 2 and the driving gearbox 14 of the chaff cutter 9 are connected, by means of a respective cardan shaft, to a corresponding power take-off of the agricultural vehicle 3.

In particular, with the connection of the driving gearbox 14 of the chaff cutter 9 to the corresponding power take-off of the agricultural vehicle 3, the motion originating from the power take-off of the agricultural vehicle 3 can be transmitted from the driving gearbox 14 to the driving gear 15a of the gear train 13, which in turn transmits it to all the driven gears 15b of the gear train 13, through the idler gears 15b, so as to cause the rotation of the output shafts 16, which are connected to the driven gears 15b and, therefore, to the cutting blades 11 of the chaff cutter 9.

With the apparatus according to the invention thus mounted on the agricultural vehicle 3, the agricultural vehicle 3 is made move forward on a field cultivated with sunflower plants.

During the advancement of the agricultural vehicle 3 over the cultivated field, the sunflower plants encountered by the harvesting head 2 enter the passage slits 6 and, as the agricultural vehicle 3 advances, pass through the passage slits 6 longitudinally, until they reach the cutting means 7, which sever the upper parts and, in particular, the blooms from the sunflower plants that have entered the passage slits 6, and once these upper parts have fallen into the container bodies 5 they are entrained by the conveyance means 8 of the harvesting head 2 toward the agricultural vehicle 3, so that they can be collected and stored.

While the agricultural vehicle 3 proceeds in its advancement, the woody stalks of the sunflower plants left on the cultivated field, after the cutting means 7 have severed their upper part, are shredded by the action of the cutting blades 11 of the chaff cutter 9.

In practice it has been found that the invention fully achieves the intended aim and objects.

In particular, it is pointed out that, by virtue of the presence of the gear train for transmitting the motion to the cutting blades of the chaff cutter, the supporting frame of the latter can be made so as to be extremely compact, thus allowing the harvesting head to which the chaff cutter is coupled to be able to work positively with any variety of sunflowers.

Furthermore, it is emphasized that, again by virtue of the gear train which transmits the motion to the cutting blades of the shredding device, the rotation speed of the cutting blades can reach and exceed 3000 rpm, thus ensuring a better quality of shredding of the woody stalks and, once in steady operation, through inertia reducing the effort and therefore the energy consumption of the chaff cutter, with respect to the prior art.

It should also be noted that the chaff cutter of the apparatus according to the invention offers a robust mechanism that is not affected by any impacts against the ground or breakages owing to fatigue, as happens with chaff cutters of the prior art which are provided with numerous gearboxes.

Another advantage of the invention is that it requires fewer maintenance interventions with respect to the prior art.

Another advantage is that, by virtue of the reduction of weight and of encumbrance, caused by the presence of the gear train, it has been made possible to make the chaff cutter with a considerably greater length than that of chaff cutters of the prior art, and it is possible to produce chaff cutters reaching 12 m in length.

Another advantage of the invention is that, by virtue of the reduced encumbrance of the chaff cutter of the apparatus according to the invention, it is possible to insert, between the supporting frame of the chaff cutter and the harvesting head, the subframe that makes it possible to easily mount and dismount the chaff cutter onto/from the harvesting head, furthermore offering the user the possibility of purchasing only the chaff cutter, separately from the harvesting head, so as to be able to upgrade harvesting heads already in use, basically enabling them to be retrofitted.

The invention, thus conceived, is susceptible of numerous modifications and variations, all of which are within the scope of the appended claims. Moreover, all the details may be substituted by other, technically equivalent elements.

In practice, the materials used, as well as the contingent shapes and dimensions, may be any according to the requirements and to the state of the art.

The disclosures in Italian Patent Application No. 102023000024510 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. An apparatus for the field harvesting of sunflowers, comprising a harvesting head (2) which can be associated with the front part of an agricultural vehicle (3) which can move over a field cultivated with sunflower plants, said harvesting head (2) having a harvesting bar (4), which extends substantially transversely to an advancement direction of the agricultural vehicle (3) and supports, on its forward-facing side, with respect to the advancement direction of the agricultural vehicle (3), a plurality of harvesting containment bodies (5), each one defining a respective receptacle (5a) which is open in an upward region and being mutually spaced apart along the longitudinal extension of said harvesting bar (4) in order to define a plurality of passage slits (6), which can be passed through longitudinally, when said agricultural vehicle (3) advances, by the sunflower plants that are present in the cultivated field, said harvesting bar (4) being provided with cutting means (7), which are configured to sever, from the sunflower plants passing through said passage slits (6), their upper part, leaving on the cultivated field the woody stalks of the sunflower plants, and with conveyance means (8), which are configured to convey the parts severed from the sunflower plants in the direction of the agricultural vehicle (3), below said harvesting head (2) there being mounted a chaff cutter (9) which has a supporting frame (10) which extends substantially parallel to said harvesting bar (2) and supports a plurality of cutting blades (11), which are arranged mutually spaced apart along the longitudinal extension of said supporting frame (10) and can rotate about respective axes of rotation (11a) which are substantially perpendicular to the longitudinal extension of said supporting frame (10) and are oriented, in use, substantially at right angles to the ground, said cutting blades (11) being kinematically connected, by virtue of motion transmission means, to a power take-off of the agricultural vehicle (3), for their rotational actuation about their respective axes of rotation, in order to perform, during the forward travel of the agricultural vehicle, the shredding of the woody stalks of the sunflower plants left on the cultivated field after the passage of said harvesting head (2), **characterized in that** said motion transmission means comprise a gear train (13) which is arranged along the longitudinal extension of said supporting frame (10) and receives motion from a single driving gearbox (14), which can be kinematically connected to said power take-off of the vehicle.

2. The apparatus according to claim 1, **characterized in that** said gear train comprises a plurality of gears (15a, 15b, 15c), which are arranged in series with respect to each other along the longitudinal extension of said supporting frame (10a) and mutually meshing, said gears (15a, 15b, 15c) being rotatably mounted on said supporting frame (10) with their axes, which are parallel to each other, oriented substantially at right angles to the longitudinal extension of said supporting frame (10), at least one group of said gears being connected, by means of respective output shafts (16) which protrude downward from said supporting frame (10), to respective cutting blades (11).

3. The apparatus according to claim 2, **characterized in that** said gears (15a, 15b, 15c) comprise, arranged mutually in series, at least one driving gear (15a), connected to said driving gearbox (14), driven gears (15b), connected to respective cutting blades (11), and idler gears (15c), interposed between said driven gears (15b).

4. The apparatus according to claim 1, **characterized in that** said supporting frame (10) comprises at least one tubular portion (10), which accommodates internally said gear train (13) and is filled with gear lubricant.

5. The apparatus according to claim 1, **characterized in that** said chaff cutter (9) is mounted on said harvesting head (2) in a removable manner.

6. The apparatus according to one or more of the preceding claims, **characterized in that** said chaff cutter (9) is mounted on said harvesting head (4) with the possibility to rotate about a hinge axis (9a) which is substantially parallel to the longitudinal extension of said supporting frame (10), means being provided for adjusting the angular position of said chaff cutter (9) about said hinge axis (9a) with respect to said harvesting head (2).

7. The apparatus according to one or more of the preceding claims, **characterized in that** it comprises, between said harvesting head (2) and said chaff cutter (9), at least one subframe (2) which is configured to allow the mounting of said chaff cutter (9) on said harvesting head (2).
